# EUROPEAN PATENT APPLICATION

(11) **EP 2 397 363 A1**
(43) Date of publication of application: **21.12.2011**
(21) Application number: 11160056.5
(22) Date of filing: 28.03.2011
(51) Int. Cl.: B60N 2/50, B60N 2/52

(54) **A pneumatic vehicle seat**

(30) Priority: 31.03.2010 TR 201002479
(71) Applicant: Martur Sunger ve Koltuk Tesisleri Ticaret ve Sanayi Anonim Sirketi, 16140 Bursa (TR)
(72) Inventor: Turletti, Massimo, Torino (IT)
(74) Representative: Dericioglu, Ekin

(57) **Abstract**

The present invention relates to a height adjustable pneumatic vehicle seat (1) used in vehicles. The inventive pneumatic vehicle seat (1) comprises a slide (2) which is fixed to the vehicle floor, a lower frame (3) moveable on the slide (2), an upper frame (4) parallel to the plane where the lower frame (3) is located, a lifting assembly (5), which provides the connection between the upper frame (4) and the slide (2), and enables the upper frame (4) to move in vertical axis, a valve assembly (6) which enables adjustment of the height of the upper frame (4), a control mechanism (7) which enables the user to control the valve assembly (6).

## Description

### Field of the Invention

The present invention relates to a height adjustable pneumatic vehicle seat used in vehicles.

### Background of the Invention

Seats used in vehicles enable the passengers and the driver to travel more comfortably and safely. Heights of these seats can be adjusted, whereby driver's comfort during driving is enhanced and the driver is enabled to have a better control of the vehicle.

At the present time, adjustment of heights of the vehicle seats is carried out usually by manual controlled, mechanical or pneumatic mechanisms. In these systems, the seat is fixed to the ends of a scissors mechanism, and the seat rises or descends as the position of the arms of the scissors change. In the state of the art, electronic systems are also used in height adjustment mechanisms, and these systems bring along high costs.

The German patent document no. DE 3219371 discloses a pneumatic seat designed for vehicles. Internal operating pressure of the pneumatic spring is increased or decreased by means of a valve controlled by switching cams.

The Great Britain patent document no. GB 2309894 discloses a pneumatic seat suspension assembly. There are upper and lower support members in the system and scissors linkages extending therebetween. There are also a pneumatic spring, a height adjuster in communication with the said spring, a dump valve, and a safety valve. The scissors linkage provides a mechanical connection between the seat bottom and the seat support. The pneumatic spring enables to raise and lower the seat bottom by use of compressed air, and this causes the parallel scissors linkage to be pushed upward causing the seat to rise. The dump valve provides the triggering that starts release of the air from the pneumatic suspension assembly and thereby the seat position may be lowered.

### Summary of the Invention

The objective of the present invention is to realize a height adjustable pneumatic vehicle seat.

Another objective of the present invention is to realize a pneumatic vehicle seat which can absorb vibrations.

### Detailed Description of the Invention

A pneumatic vehicle seat realized to fulfill the objectives of the present invention is illustrated in the accompanying figures, in which,

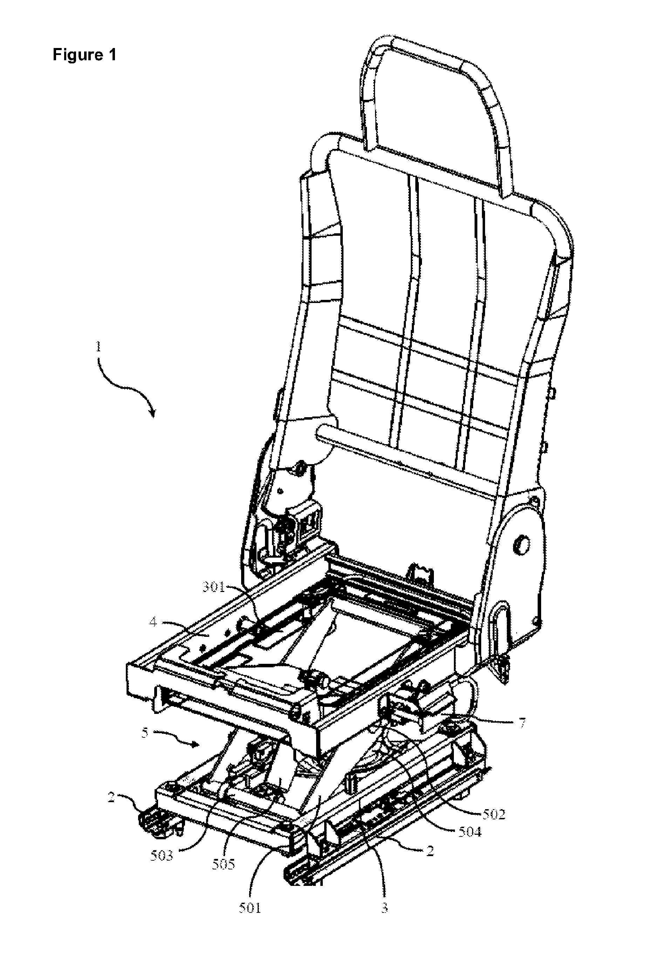

Figure 1 is the perspective view of the inventive seat frame.

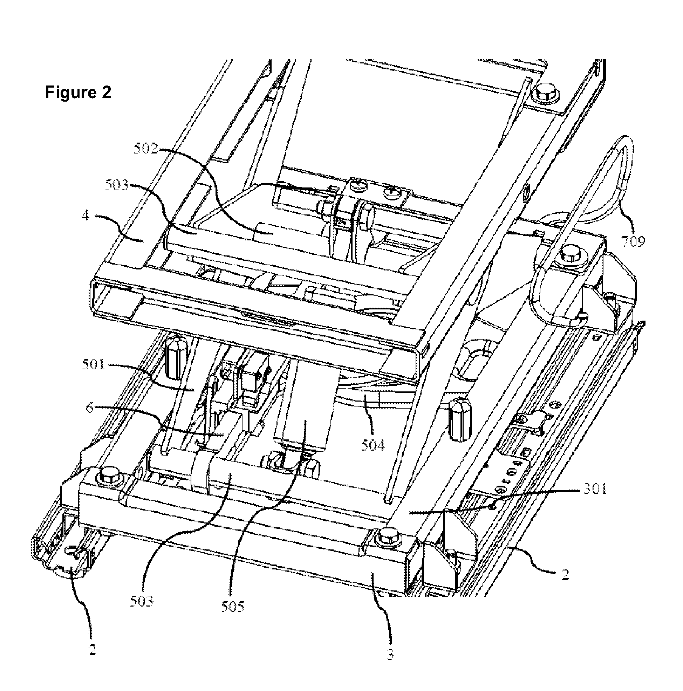

Figure 2 is the perspective view of the lifting assembly.

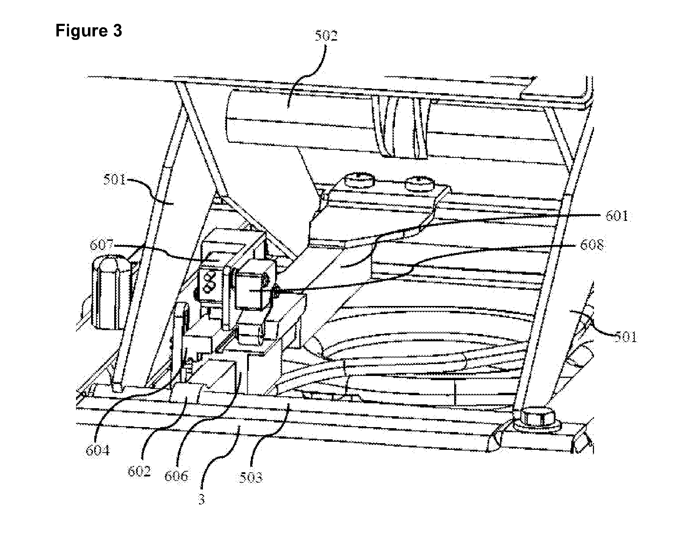

Figure 3 is the perspective view of the valve assembly.

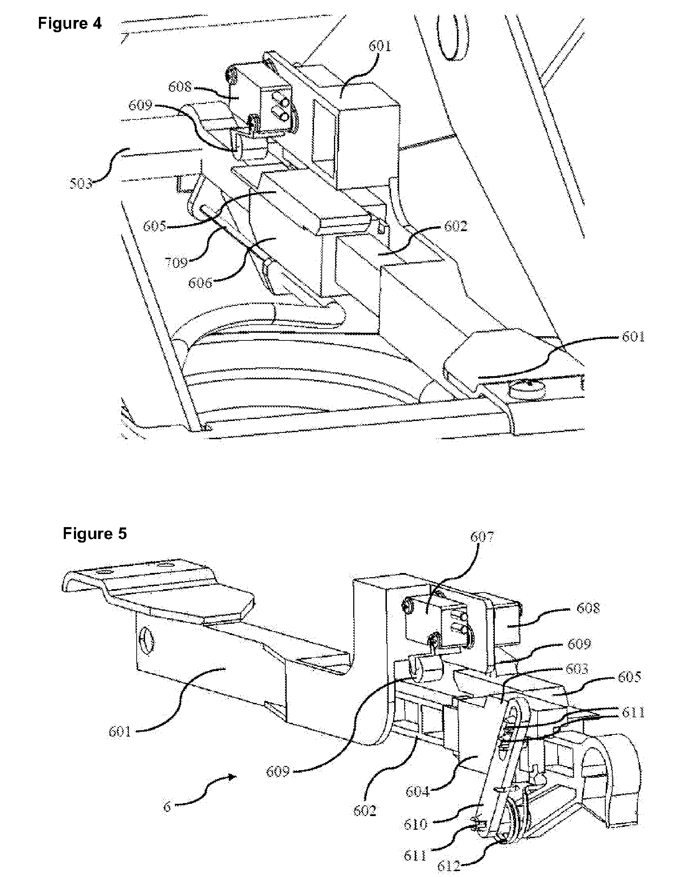

Figure 4 is the front view of the valve assembly.
Figure 5 is the rear view of the valve assembly.

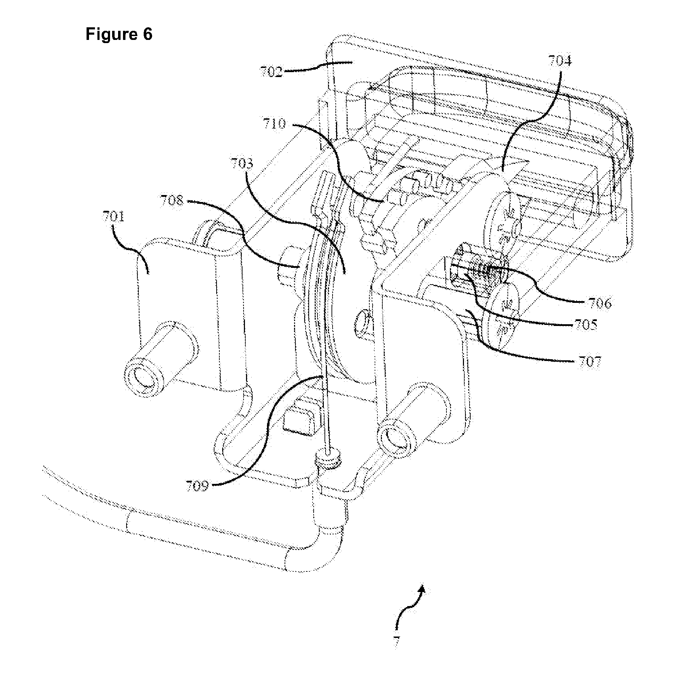

Figure 6 is the perspective view of the control mechanism.

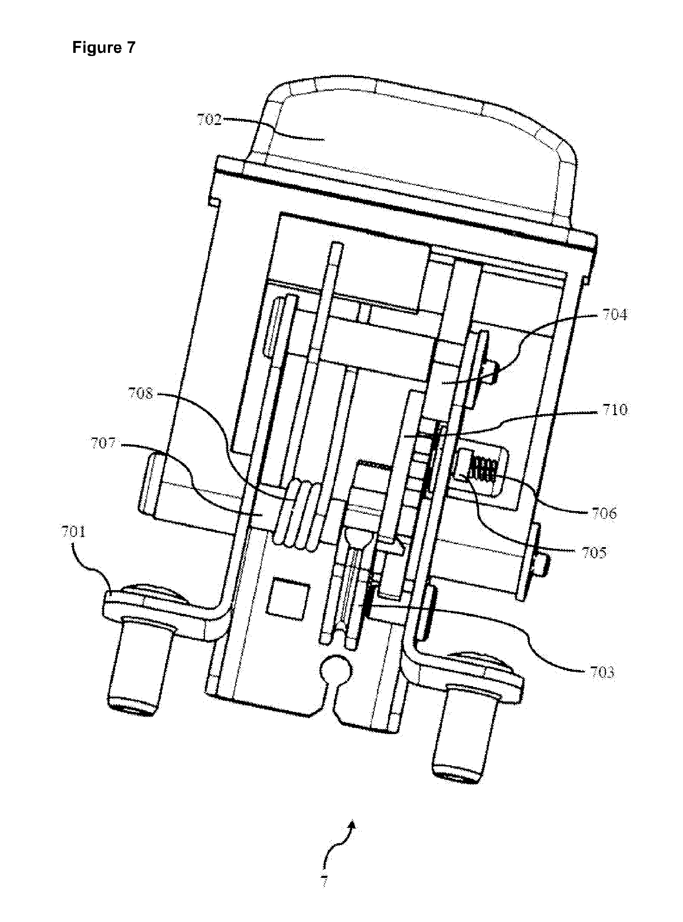

Figure 7 is the top view of the control mechanism.

The components illustrated in the figures are each given a reference number where the numbers refer to the following:
1. Seat
2. Slide
3. Lower frame
   301. Spindle slot
4. Upper frame
5. Lifting assembly
   501. Arm
   502. Shaft
   503. Spindle
   504. Bellows
   505. Piston
6. Valve assembly
   601. Main body
   602. Inner body
   603. Load cam
   604. Compensator
   605. Exhaust cam
   606. Satellite
   607. Load valve
   608. Exhaust valve
   609. Valve roller
   610. Compensator rod
   611. Pin
   612. Spring
7. Control mechanism
   701. Bracket
   702. Handle
   703. Wire puller
   704. Harpoon
   705. Positioning pin
   706. Positioning spring
   707. Retainer pin
   708. Adjustment spring
   709. Wire
   710. Gear

The inventive pneumatic vehicle seat (1) comprises
- at least one slide (2) which is fixed to the vehicle floor,
- at least one lower frame (3) moveable on the slide (2),
- at least one upper frame (4) parallel to the plane where the lower frame (3) is located,
- at least one lifting assembly (5), which provides the connection between the upper frame (4) and the slide (2), and enables the upper frame (4) to move in vertical axis,
- at least one valve assembly (6) which enables to control the lifting assembly (5),
- at least one control mechanism (7) which enables the user to control the valve assembly (6).

The slide (2) is fixed to the vehicle floor, and the lower frame (3) can move on the slide (2) along the slide (2). Thus the seat (1) is enabled to move in a single axis.

The lower and upper frames (3, 5) are rectangular and each of them comprises a spindle slot (301) on one surface thereof which enables connection with the lifting assembly (5).

The lifting assembly (5) comprises at least two scissors-shaped arms (501), at least one shaft (502) which passes through these arms (501) and enables rotation of the arms (501), at least two spindles (503) which are fixed to the ends of the arms (501) and are moveable within the spindle slot (301), at least one bellows (504) whose one end is fixed to the lower frame (3) while the other end is fixed to the lifting assembly (5) and which enables changing the height of the seat (1), and at least one piston (505) which absorbs the vibrations of the seat (1). In the preferred embodiment of the invention, there are two slides (2), a lower and an upper frame (3, 4) having two spindle slots (301), and two pairs of arms (501) which move within the said spindle slots (301). Motion of the units within the lifting assembly (5) is transmitted to the upper frame (4) by the help of the spindle (503) moving in the spindle slots (301). Upon rotation of these arms (501) in the axis of the shaft (502), the distance between the lower and upper frames (3, 4) changes. Thus height of the seat (1) is enabled to be changed. In the preferred embodiment of the invention, the arms (501) are disposed parallel to each other. In the said embodiment, the ends of the spindle (503) are fixed to the parallel arms (501) and thus the arms (501) are enabled to move together. With the change of the pressure in the bellows (504), height of the bellows (504) changes; and upon rotation of the arms (501), height of the seat (1) changes. One end of the piston (505) is mounted to the shaft (502) while the other end is mounted to the spindle (503), and the piston (503) may rotate around its own ends.

The valve assembly (6) comprises a main body (601) fixed to the lower frame (3),
- a telescopic inner body (602) which is fixed to the spindle (503) and can move within the main body (601),
- at least one compensator (604) which is disposed on the inner body (602) and has at least one load cam (603),
- at least one satellite (606) which is disposed on the inner body (602) and has at least one exhaust cam (605),
- at least one two-outlet load valve (607) which is fixed on the main body (601),
- at least one two-outlet exhaust valve (608) which is fixed on the main body (601),
- at least two valve rollers (609), at least one of which enables control of the load valve (607) and at least one of which enables control of the exhaust valve (608),
- at least one compensator rod (610) which provides the connection between the compensator (604), satellite (606) and inner body (602),
- at least three pins (611) which fit into the compensator (604), satellite (606) and inner body (602) to enable connection of these units to the compensator rod (610),
- at least one spring (612) which provides flexibility to the connection by applying force to the compensator rod (610).

The main body (601) is fixed to the lower frame (3) from one end thereof, while the inner body (602) is connected to the other end thereof. The load and exhaust valves (607, 608) are fixed on the main body (601). One end of the inner body (602) moves on the main body (601), while the other end is fixed to the spindle (503). The compensator (604) and the satellite (606) are mounted on the inner body (602). The compensator (604) surrounds the inner body (602) and there is at least one load cam (603) on the surface of the compensator (604) facing the load valve (607). On the surface of the load valve (607) facing the compensator (604), there is at least one valve roller (609) which controls the valve (607). The satellite (606) may move on the inner body (602), and there is at least one exhaust cam (605) on the surface of the satellite (606) facing the exhaust valve (608). On the surface of the exhaust valve (608) facing the satellite (606), there is at least one valve roller (609) which controls the valve (608). During the movement of the inner body (602) within the main body (601), the valve rollers (609) move by following the surfaces of the compensator (604) and the satellite (606) which face the valves (607, 608). The load cam (603) is located at the end of the inner body (602) that is close to the main body (601), while the exhaust cam (605) is located at the end thereof that is close to the spindle (503). Upon contact of the valve roller (609) of the load valve (607) with the load cam (603), flow from the valve (607) begins.

During rising of the seat (1), the arms (501) rotate in the axis of the shaft (502) and the ends of the arms (501) within the lower frame (3) approach each other. In order to achieve this, the inner body (602) coupled to the spindle (503) enters into the main body (601), and upon disconnection of the contact of the valve roller (609) with the load cam (603), flow is cut off and the movement is terminated.

During lowering of the seat (1), ends of the arms (501) within the lower frame (3) move away from each other and simultaneously the inner body (602) moves out of the main body (601). At this time, the valve roller (609) is in contact with the exhaust cam (605). As the movement of the inner body (602) stops, that is to say contact of the valve roller (609) with the exhaust cam (605) ceases, the exhaust valve (608) stops air discharge and lowering of the seat is completed.

The compensator rod (610) provides the connection between the compensator (604), satellite (606) and inner body (602). There is provided one circular hole on one end of the compensator rod (610) and one elliptical hole on the other end thereof. The compensator rod (610) can move by rotating around the pin (611) which passes through the circular hole and is fixed to the inner body (602). Two pins (611) pass through the elliptical hole of the compensator rod (610). One of these pins (611) is fixed to the compensator (604) while the other is fixed to the satellite (606). The compensator rod (610) rotates around the pin (611) that passes through its circular hole. During this motion, positions of the pins (611) in the elliptical holes and of the compensator (604) and satellite (606), to which the pins (611) are connected, on the inner body (602) change. A spring (612), whose one end is connected to the compensator rod (610) while the other end thereof is connected to the inner body (602), applies force in a direction which obstructs movement of the compensator rod (610). Thus, during changing the height of the seat (1), a certain amount of room of flexibility is obtained between the parts used for connection. This way, the seat (1) is ensured to be more comfortable and height adjustment can be performed more conveniently.

The control mechanism (7) comprises at least one bracket (701) which is fixed to the upper frame (4), at least one handle (702) which enables the user to perform height adjustment, at least one wire puller (703) which has at least one gear (710) that enables seat (1) height to be adjusted to the desired position, at least one harpoon (704) which enables adjusting the position of the wire puller (703) and which is connected to the handle (702), at least one positioning pin (705) connected to the bracket (701), at least one positioning spring (706) which applies force to the positioning pin (705), at least one retainer pin (707) which passes through the wire puller (703) and bracket (701), at least one adjustment spring (708) which applies force on the wire puller (703) by biasing, and at least one wire (709) which is connected to the wire puller (703) and transmits motion of the wire puller (703) to the valve assembly (6).

The bracket (701) surrounds the units within the control mechanism (7) and enables the control mechanism (7) to be fixed to the upper frame (4). The handle (702) is mounted to the end of the bracket (701) which is not fixed to the upper frame (4) and which faces outwards of the seat (1). The wire puller (703) and the gear (710) shrink fit to each other and they move together. The wire puller (703) moves by rotating in the axis of the retainer pin (707). One end of the wire (709) is fixed to the wire puller (703) and rotation of the wire puller (703) enables the wire (709) to be tensioned or released. There are teeth provided on the gear (710) at a number that corresponds to different height positions of the seat (1). The harpoon (704) is connected to the handle (702) and enables the gear (710) to move upwards or downwards by one unit depending on the movement of the handle (702). When the handle (702) is released, the harpoon (704) returns to its initial position through the action of the spring (708). The positioning pin (705) enables the gear (710) and the wire puller (703) to be fixed at the position that they are adjusted. One end of the positioning pin (705) passes through the bracket (701) and contacts the gear (710), while the other end thereof extends outwardly from the bracket (701). The positioning spring (706) is located at the end of the positioning pin (705) that extends outwardly from the bracket (701), and pushes the positioning pin (705) towards the gear (710). The positioning pin (705) fits into the slot provided on the gear (710) in order to keep the rotating gear (710) in its new position.

Preferably a metal wire coated with plastic is used as the wire (709).

Upon moving the handle (702) upward, the harpoon (704) contacts the gear (710) and rotates the gear (710) as much as the gap between two teeth. The wire puller (703) connected to the gear (710) rotates. Upon rotation of the wire puller (703) the wire (709) moves. The wire (709) transmits this motion to the satellite (606) to which it is connected, and changes the position of the satellite (606). Upon movement of the satellite (606), the load cam (603) or the exhaust cam (605) contacts the valve rollers (609). Then the load (607) or exhaust valve (608) is activated and pressurized air is transmitted to the bellows (504) or air flow is stopped. Thus height of the seat (1) is enabled to be changed. The same system also works in lowering the handle (702).

Within the scope of these basic concepts, it is possible to develop various embodiments of the inventive pneumatic vehicle seat (1). The invention can not be limited to the examples described herein; it is essentially according to the claims.

## Claims

1. A pneumatic vehicle seat (1) comprising
at least one slide (2) which is fixed to the vehicle floor,
at least one lower frame (3) moveable on the slide (2),
at least one upper frame (4) parallel to the plane where the lower frame (3) is located,
at least one lifting assembly (5), which provides the connection between the upper frame (4) and the slide (2), and enables the upper frame (4) to move in vertical axis,
at least one control mechanism (7) which enables the user to control the valve assembly (6);
and **characterized by** at least one valve assembly (6) which enables to control the lifting assembly (5), and comprises a main body (601) fixed to the lower frame (3),
- a telescopic inner body (602) which can move within the main body (601),
- at least one compensator (604) which is disposed on the inner body (602) and has at least one load cam (603),
- at least one satellite (606) which is disposed on the inner body (602) and has at least one exhaust cam (605),
- at least one two-outlet load valve (607) which is fixed on the main body (601),
- at least one two-outlet exhaust valve (608) which is fixed on the main body (601),
- at least two valve rollers (609), at least one of which enables control of the load valve (607) and at least one of which enables control of the exhaust valve (608),
- at least one compensator rod (610) which provides the connection between the compensator (604), satellite (606) and inner body (602),
- at least three pins (611) which fit into the compensator (604), satellite (606) and inner body (602) to enable connection of these units to the compensator rod (610),
- at least one spring (612) which provides flexibility to the connection by applying force to the compensator rod (610) and eliminates the gap in the mechanism.

2. A pneumatic vehicle seat (1) according to Claim 1, **characterized by** the main body (601), which is fixed to the lower frame (3) from one end thereof, while the other end thereof is connected to the inner body (602), and on which the load and exhaust valves (607, 608) are fixed.

3. A pneumatic vehicle seat (1) according to Claim 1 and 2, **characterized by** a compensator (604) which surrounds the inner body (602), and has at least one load cam (603) on the surface thereof facing the load valve (607).

4. A pneumatic vehicle seat (1) according to Claim 1 to 3, **characterized by** a satellite (606) which can move on the inner body (602), and has at least one exhaust cam (605) on the surface thereof facing the exhaust valve (608).

5. A pneumatic vehicle seat (1) according to Claim 1 to 4, **characterized by** a compensator rod (610) which has one circular hole on one end thereof and one elliptical hole on the other end thereof, and which moves by rotating around the pin (611) that is fixed to the inner body (602) upon passing through the circular hole.

6. A pneumatic vehicle seat (1) according to Claim 5, **characterized by** a compensator rod (610); which is connected by at least two pins (611), one of which is fixed to the compensator (604) while the other is to the satellite (606), and which can move within the elliptical hole; and which rod, with the movement of the said two pins (611) when it is rotating around the pin (611) that passes through the circular hole, enables the satellite (606) and the compensator (604) to move proportionally to each other with the purpose of providing equal amount of rising and lowering to the seat (1) in every position.

7. A pneumatic vehicle seat (1) according to Claim 1, **characterized by** a control mechanism (7); which enables the user to control the valve assembly (6); and comprises at least one bracket (701) which is fixed to the upper frame (4), at least one handle (702) which enables the user to perform height adjustment by moving it, at least one wire puller (703) which enables seat (1) height to be adjusted to the desired position, at least one harpoon (704) which enables adjusting the position of the wire puller (703) and which is connected to the handle (702), at least one positioning pin (705) connected to the bracket (701), at least one positioning spring (706) which applies force to the positioning pin (705), at least one retainer pin (707) which passes through the wire puller (703) and bracket (701), at least one adjustment spring (708) which applies force on the handle (702) by biasing, and at least one wire (709) which is connected to the wire puller (703) and transmits motion of the wire puller (703) to the valve assembly (6).

8. A pneumatic vehicle seat (1) according to Claim 7, **characterized by** a wire puller (703); which comprises a semi-circular wire puller (703), to which the wire (709) is fixed and which transmits the motion to the wire (709), and a plurality of gears (710); and which moves by rotating in the axis of the retainer pin (707).
